# EUROPEAN PATENT APPLICATION

(11) **EP 3 611 967 A1**
(43) Date of publication of application: **19.02.2020**
(21) Application number: 17926830.5
(22) Date of filing: 27.09.2017
(51) Int. Cl.: H04W 36/08

(54) **ACCESS LINK MANAGEMENT METHOD, DEVICE, STORAGE MEDIUM, AND SYSTEM**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2017/103807
(87) International publication number: WO 2019/061110

(57) **Abstract**

Provided in the embodiments of the present invention are an access link management method, device, storage medium, and system; the method comprises: after switching from a first access link provided by a first access device to a second access link provided by a second access device, saving the path of the first access link and/or the context information of the first access link; when switching from the second access link back to the first access link, restoring the first access link with the first access device according to the path of the first access link and/or the context information of the first access link; the path of the first access link and/or the context information of the first access link is also stored in a network device. Thus, the first access device does not need to re-allocate access resources to the terminal device, reducing the latency of access link switchback.

## Description

### TECHNICAL FIELD

The embodiments of the present disclosure relate to wireless communication technologies, and more particularly, to an access link management method, device, storage medium and system.

### BACKGROUND

With the development of communication technology, the research on the 5th Generation Mobile Communication Technology (5^{th} Generation, 5G) has also been launched. In the 5G system, Multi-Connection data transmission is one of the key technologies in 5G networks. The Multi-Connection data transmission refers to that data transmission may be performed between a terminal and a network side through access links provided by various access networks. For example, the terminal may transmit data with the network side through an access link provided by the 3rd Generation Partnership Project (3GPP) protocol network and an access link provided by a non-3GPP protocol network, and the terminal may also transmit data with the network side through access links provided by different Radio Access Technology (RAT) networks in the 3GPP protocol.

In the process of data transmission, the terminal often switches the access link of the access network. Generally, the terminal may switch an access link of a source access network to an access link of a new access network, and after the access link of the new access network can normally transmit data, release the access link of the source access network. This process will cause the terminal to establish a connection with a source access device that provides the source access network when the terminal returns back to the access link of the access network. At this time, the source access device may redistribute an access link resource to the terminal. Therefore, a time delay for the terminal to switch back the access link of the access network is increased.

### SUMMARY

In order to solve the foregoing technical problem, the embodiments of the present disclosure are expected to provide to an access link management method, device, storage medium and system, which can reduce the time delay for the terminal to switch back the access link of the access network.

The technical solutions of the embodiments of the present disclosure may be realized as follows.

According to a first aspect, an embodiment of the present disclosure provides an access link management method, the method is applied to a terminal device, and the method includes:
after switching from a first access link provided by a first access device to a second access link provided by a second access device, saving at least one of a path of the first access link and context information of the first access link; and
when switching from the second access link back to the first access link, restoring the first access link with the first access device according to at least one of the path of the first access link and the context information of the first access link; wherein, at least one of the path of the first access link and the context information of the first access link is also saved in a network device.

According to a second aspect, an embodiment of the present disclosure provides an access link management method, the method is applied to a network device which is a first access device or a service access management node, and the method includes:
after a terminal device switches from a first access link provided by the first access device to a second access link provided by a second access device, saving at least one of a path of the first access link and context information of the first access link; and
when the terminal device switches from the second access link back to the first access link, restoring the first access link with the terminal device according to at least one of the path of the first access link and the context information of the first access link; wherein, at least one of the path of the first access link and the context information of the first access link is also saved in the terminal device.

According to a third aspect, an embodiment of the present disclosure provides a terminal device, including: a first saving part and a first restoring part, wherein:
the first saving part is configured to: after switching from a first access link provided by a first access device to a second access link provided by a second access device, save at least one of a path of the first access link and context information of the first access link; and
the first restoring part is configured to: when switching from the second access link back to the first access link, restore the first access link with the first access device according to path of the first access link and/or the context information of the first access link; wherein, at least one of the path of the first access link and the context information of the first access link is also saved in a network device.

According to a fourth aspect, an embodiment of the present disclosure provides a network device, including a second saving part and a second restoring part, wherein:
the second saving part is configured to: after a terminal device switches from a first access link provided by a first access device to a second access link provided by a second access device, save at least one of a path of the first access link and context information of the first access link; and
the second restoring part is configured to: when the terminal device switches from the second access link back to the first access link, restore the first access link with the terminal device according to at least one of the path of the first access link and the context information of the first access link; wherein, at least one of the path of the first access link and the context information of the first access link is also saved in the terminal device.

According to a fifth aspect, an embodiment of the present disclosure provides a terminal device, including: a first network interface, a first memory and a first processor, wherein:
the first network interface is configured to receive and send a signal in a process of receiving and sending information with other external network element;
the first memory is configured to store a computer program capable of running on the first processor; and
the first processor is configured to, when running the computer program, execute the steps of the method according to the first aspect.

According to a sixth aspect, an embodiment of the present disclosure provides a network device, including: a second network interface, a second memory and a second processor;
wherein, the second network interface is configured to receive and send a signal in a process of receiving and sending information with other external network element;
the second memory is configured to store a computer program capable of running on the second processor; and
the second processor is configured to, when running the computer program, execute the steps of the method according to the second aspect.

According to a seventh aspect, an embodiment of the present disclosure provides a computer readable medium, wherein the computer readable medium stores a supervisory program of an access link, and when the supervisory program of the access link is executed by at least one processor, the steps of the method according to the first aspect or the second aspect are implemented.

According to an eighth aspect, an embodiment of the present disclosure provides an access link management system, including a terminal device and a network device, wherein:
the terminal device is configured to: after switching from a first access link provided by a first access device to a second access link provided by a second access device, save at least one of a path of the first access link and context information of the first access link; and
when switching from the second access link back to the first access link, restore the first access link with the first access device according to at least one of the path of the first access link and the context information of the first access link;
the network device is configured to: after the terminal device switches from the first access link provided by the first access device to the second access link provided by the second access device, save at least one of the path of the first access link and the context information of the first access link; and
when the terminal device switches from the second access link back to the first access link, restore the first access link with the terminal device according to at least one of the path of the first access link and the context information of the first access link.

The embodiments of the present disclosure provide the access link management method, device, storage medium and system. When it is necessary to switch from the second access link back to the first access link, since the source access link, i.e., the path and the context information of the first access link, is saved by both the terminal and the first access device, the first access link may be restored between the terminal and the first access device according to the path and the context information of the first access link saved; therefore, there is no need for the first access device to reallocate an access resource to the terminal device, thus reducing a time delay for switching back the access link.

### BRIEF DESCRIPTION OF THE DRAWINGS

Fig. 1 is a schematic diagram of a basic network architecture of 5G;
Fig. 2 is a schematic diagram of a network architecture provided by an embodiment of the present disclosure;
Fig. 3 is a flow chart of an access link management method provided by an embodiment of the present disclosure;
Fig. 4 is a flow chart of an access link management method provided by an embodiment of the present disclosure;
Fig. 5 is a schematic diagram of another network architecture provided by an embodiment of the present disclosure;
Fig. 6 is a schematic diagram of a data transmission process provided by an embodiment of the present disclosure;
Fig. 7 is a schematic composition diagram of a terminal device provided by an embodiment of the present disclosure;
Fig. 8 is a schematic composition diagram of another terminal device provided by an embodiment of the present disclosure;
Fig. 9 is a schematic diagram of a specific hardware structure of a terminal device provided by an embodiment of the present disclosure;
Fig. 10 is a schematic composition diagram of a network device provided by an embodiment of the present disclosure;
Fig. 11 is a schematic composition diagram of another network device provided by an embodiment of the present disclosure;
Fig. 12 is a schematic diagram of a specific hardware structure of a network device provided by an embodiment of the present disclosure; and
Fig. 13 is a schematic composition diagram of an access link management system provided by an embodiment of the present disclosure.

### DETAILED DESCRIPTION

In order to understand the features and technical contents of the embodiments of the present disclosure in more detail, the implementation of the embodiments of the present disclosure will be described in detail below with reference to the attached drawings, which are for reference only and are not intended to limit the embodiments of the present disclosure.

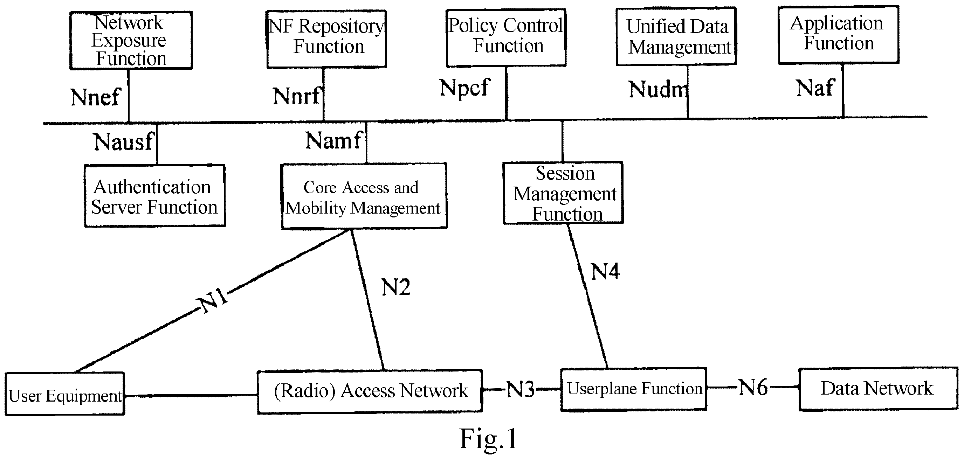

Fig. 1 illustrates a basic network architecture of 5G with multiple accesses, which may be referred to as a Service-Based Architecture (SBA). As shown in Fig. 1, a User Equipment (UE) is accessed to a Core Access and Mobility Management Function (AMF) through a (Radio) Access Network (R)AN, and the UE may also be directly accessed to the AMF. The AMF is used to process a control plane message of the network, and the function of the AMF is similar to EPS Mobility Management (EMM) in a Mobility Management Entity (MME) in a Long Term Evolution (LTE) system. An Authentication Server Function (AUSF) is similar to an authentication function of the MME in the LTE system, which realizes bidirectional authentication of the UE, and supports a unified authentication framework. A User Plane Function (Userplane Function, UPF) is similar to an integration of a Service Gateway S-GW and a PDN Gateway P-GW in the LTE system, and is connected with a data network (DataNetwork). A Session Management Function (Seesion Management Function, SMF) is similar to an EPS Session Management (ESM) function in the LTE system, which mainly manages, establishes, modifies and releases sessions. From this, it can be seen that the function set of the AUSF, the AMF and the SMF is similar to the MME in the LTE system. In addition, the structure shown in Fig. 1 further includes: a Network Exposure Function (NEF), a NF Repository Function (NRF), a Policy Control Function (PCF), and a Unified Data Management (UDM) and Application Function (AF). The NEF is used to show some capabilities of the network functions to the outside, such as a monitoring capability, a supply capability, and a policy or billing capability. The NRF may support a service discovery function. The PCF supports a unified policy framework for managing network behaviors. The UDM includes an application Front End (FE) and a User Data Repertory (UDR). The FE may access subscriber information in the UDR. The UDM has a function similar to the HSS in the LTE system. The UDR provides subscription data storage services. The application Front End (FE) provides data-based application logics. The AF is used to provide application services.

As may be seen from the network in the above architecture, the architecture between the (Radio) Access Network (R)AN and the data network (DataNework) may be called a 5G core network, and network elements in the 5G core network are called network elements of the 5G core network. In 5G technology, the terminal is allowed to realize multi-connection data transmission through access links of a variety of access networks. The variety of access networks may include access networks conforming to 3GPP standards that adopt 5G New Radio (NR) access technology, LTE access, or the like, and may also include non-3GPP standard access networks such as WIreless-FIdelity (WIFI) networks, etc., which will not be elaborated in the present embodiment.

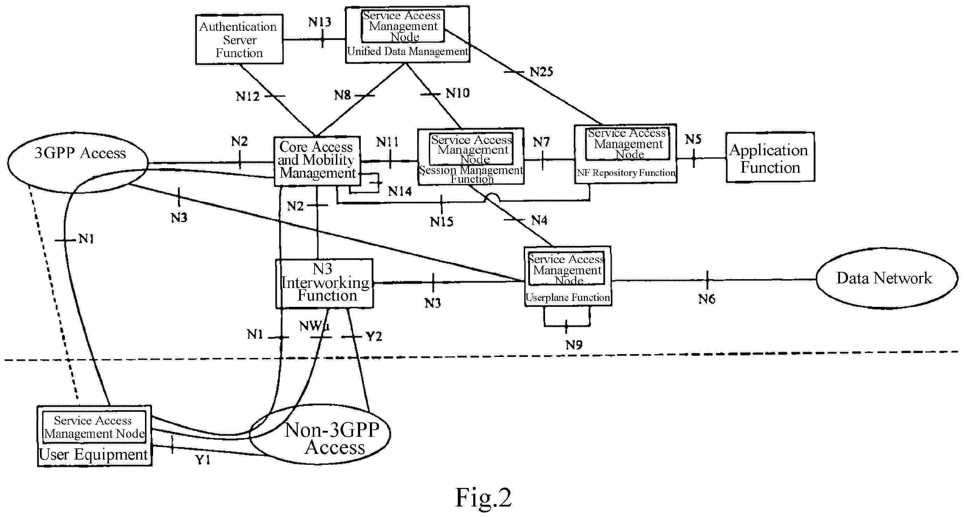

In order to carry out multi-connection data transmission for services in a 5G network, the embodiments of the present disclosure additionally set a Service Access Management Node (ATSSS/AT3SF) in the network architecture shown in Fig. 1 to control a data flow to be transmitted for multi-connection transmission. The data transmission of Dual Connection (DC) based on the 5G network architecture is taken as an example. When the data flow to be transmitted is a downlink data flow, the service access management node may be set as an independent network element entity between the (R)AN and the network elements of the 5G core network; and may also be distributed in the form of functional modules in network elements of the 5G core network having data transmission requirements with the UE, such as the UDM, the SMF, the PCF and the UPF, which will not be elaborated in the present embodiment. When the data flow to be transmitted is an uplink data flow, the service access management node is arranged between the (R)AN and the UE as an independent network element entity, and may also be implemented as a functional module of the UE. In the embodiment of the present disclosure, the service access management node AT3SF may be distributed in the network elements of the 5G core network having data transmission requirements, such as the UDM, the SMF, the PCF, the SMF and the UPF, and may also be arranged in the UE. Referring to the architecture diagram shown in Fig. 2, an access network conforming to 3GPP standard may be provided by a 3GPP Protocol Access device (3GPP Access) such as a 5G base station (gNB) or a LTE base station (eNB); and non-3GPP standard access networks may be provided by a Non-3GPP Access device (Non-3GPP Access) such as a WIFI access point.

Based on the above contents, the following embodiments are proposed.

### First embodiment

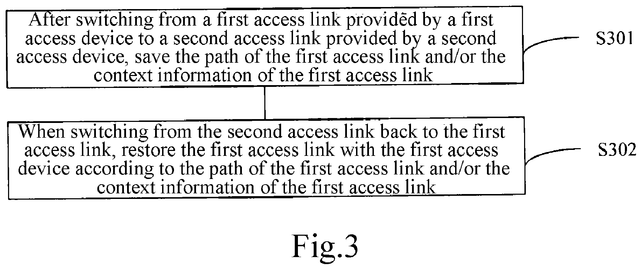

Fig. 3 illustrates an access link management method provided by an embodiment of the present disclosure. Referring to Fig. 3, the method may be applied to a terminal device, and includes the following steps.

In S301: after switching from a first access link provided by a first access device to a second access link provided by a second access device, a path of the first access link and/or context information of the first access link is saved.

In S302: when switching from the second access link back to the first access link, the first access link with the first access device is restored according to the path of the first access link and/or the context information of the first access link; where, the path of the first access link and/or the context information of the first access link is also saved in a network device.

It can be seen from the technical solution shown in Fig. 3 that when it is necessary to switch from the second access link back to the first access link, since the source access link, i.e., the path and/or the context information of the first access link, has been saved by both the terminal and the first access device, the first access link may be restored between the terminal and the first access device according to the path and/or the context information of the first access link saved; therefore, there is no need for the first access device to reallocate an access resource to the terminal device, thus reducing a time delay for switching back the access link.

It should be noted that the first access device and the second access device may be an access device conforming to 3GPP protocol and a non-3GPP protocol access device respectively, and may also be access devices of different RATs in the 3GPP protocol respectively, which will not be elaborated in the present embodiment.

Moreover, it should also be noted that in a specific switching process, the first access link may also be referred to as a source access link, and the second access link may also be referred to as a target access link.

It is understood that the terminal device in the embodiment of the present disclosure may include a cellular phone, a smart phone, a Session Initiation Protocol (SIP) phone, a laptop computer, a Personal Digital Assistant (PDA), a satellite radio, a global positioning system, a multimedia device, a video device, a digital audio player (e.g., MP3 player), a camera, a gaming console, a tablet computer, or any other device having similar functions. At the same time, the terminal device may also be called by those skilled in the art as a user equipment, a terminal, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies.

For the technical solution shown in Fig. 3, in a probable implementation, the path of the first access link includes a Radio Resource Control (RRC) path, a Non-access Stratum (NAS) path, a Packet Data Network (PDN) path, and a Protocol Data Unit (PDU) session path between the terminal device and the first access device, a connection between the terminal device and a service access management node, and the like;

the context information of the first access link includes at least one or more of the followings:
context information of an access stratum of the terminal device, context information of a non-access stratum of the terminal device, connection information related to the terminal device between the first access device and a core network, and context configuration information of the connection between the terminal device and the service access management node.

For the probable implementation mentioned above, specifically, the context information of the access stratum of the terminal device may include: security configuration information of the access stratum of the terminal, bearer configuration information of the access stratum of the terminal, competence information of the access stratum of the terminal, and the like;
the context information of the non-access stratum of the terminal device includes: security configuration information of the non-access stratum of the terminal, mobile management information of the non-access stratum of the terminal, connection status information of the non-access stratum of the terminal, session management information of the non-access stratum of the terminal, Internet Protocol (IP) address information allocated to the terminal, Quality of Service (Qos) information of the non-access stratum of the terminal, and the like; and
the connection information related to the terminal device between the first access device and the core network includes channel information of a transmission network stratum allocated to the terminal, a device identification of the core network, and an identification of the first access device.

It is understood that, in the protocol stack, RRC and Radio Access Network Application Protocol (RANAP) stratums and protocol stratums thereunder are called access stratums, while Mobile Management (MM), Session Management (SM), Call Control (CC), and SMS above the RRC and Radio Access Network Application Protocol (RANAP) stratums are called non-access stratums. In short, a process of the access stratum refers to a process in which a device of a radio access stratum, such as a Radio Network Controller (RNC), an eNodeB and a gNB needs to participate in. A process of the non-access stratum refers to a signaling process that needs to be processed by the UE and the Core Network (CN) only, and does not need to be processed by the RNC, the eNodeB and the gNB.

It should be noted that the context information elaborated in the above specific example may describe attribute information of the first access link, so that the first access link can be restored according to the attribute description information in the above context when switching back to the first access link, and the first access link can be reestablished without reallocating the network resources by the first access device.

In the actual application process, the access device needs to provide access links for a large number of terminal devices, so the terminal and the access device cannot save the path and the context information of the first access link for a long time. Based on this, during specific implementation, after switching from the first access link provided by the first access device to the second access link provided by the second access device, the saving the path of the first access link and/or the context information of the first access link in step S301 may include:
after switching from the first access link provided by the first access device to the second access link provided by the second access device, setting a first timer and timing according to a preset duration;
saving the path of the first access link and/or the context information of the first access link before the first timer expires; and
releasing the path of the first access link and/or the context information of the first access link when the first timer expires.

From this, it can be seen that the time for saving the path of the first access link and/or the context information of the first access link is timed by the timer and the path of the first access link and/or the context information of the first access link is released after the timer expires. In this way, a utilization ratio of storage resources of the terminal for saving the path of the first access link and/or the context information of the first access link can be improved.

It should be noted that the preset duration may be set according to duration configuration information issued by the network device to the terminal, and may also be obtained after the terminal gives suggestions on the duration setting to the network side by using an interaction with the network device, which will not be elaborated in the present embodiment.

For the technical solution in Fig. 3, in a probable implementation, if the terminal does not occupy all the access resources of the first access link before switching to the second access link, correspondingly, the context information of the first access link may be configuration information of partial bearers or partial Qos flows or partial service data flows or partial PDU sessions or partial PDN connections in the first access link.

For the technical solution in Fig. 3, in a probable implementation, if the terminal occupies all the access resources of the first access link before switching to the second access link, correspondingly, the context information of the first access link may be configuration information of each bearer or each Qos flow or each service data flow or each PDU session or each PDN connection in the first access link.

On the basis of the two probable implementations above, the method may further include:
identifying the configuration information of partial bearers or partial Qos flows or partial service data flows or partial PDU sessions or partial PDN connections in the first access link, or, identifying the configuration information of each bearer or each Qos flow or each service data flow or each PDU session or each PDN connection in the first access link. A process of identifying the configuration information may be completed by the terminal device, or completed by the network device. The process may also be that after the terminal device and the network device confirm a unified identifying strategy in advance through interaction, the terminal device and the network device respectively carry out identifying according to the identifying strategy, thus realizing the unity of identifying.

For the technical solution shown in Fig. 3, in a probable implementation, when switching from the second access link back to the first access link, the restoring the first access link with the first access device according to the path of the first access link and/or the context information of the first access link in S302 may specifically include:
when switching from the second access link back to the first access link, sending a restoring request message to a network device; and
receiving an acknowledgement message sent by the network device with respect to the restoring request message.

It is understood that the restoring request message may include an identification of configuration information of a bearer or a Qos flow or a service data flow or a PDU session or a PDN connection needing to be restored, so that the network device learns the bearer or the Qos flow or the service data flow or the PDU session or the PDN connection needing to be restored in the first access link according to the identification of the configuration information.

For the technical solution shown in Fig. 3, in another probable implementation, when switching from the second access link back to the first access link, the restoring the first access link with the first access device according to the path of the first access link and/or the context information of the first access link in S302 may specifically include:
when switching from the second access link back to the first access link, receiving a restoring instruction message sent by the network device; and
sending a restoring response message to the network device with respect to the restoring instruction message.

It is understood that the restoring instruction message includes an identification of configuration information of a bearer or a Qos flow or a service data flow or a PDU session or a PDN connection needing to be restored, so that the terminal device may learn the bearer or the Qos flow or the service data flow or the PDU session or the PDN connection needing to be restored in the first access link according to the identification of the configuration information.

It should be noted that the first access link can be restored after the terminal and the network device interact through the above two possible implementations.

For the foregoing solutions, the network device may be an additionally provided service access management node ATSSS or the first access device during specific implementation. Therefore, when the network device is the service access management node, the message sending and receiving between the terminal device and the network device may include:
sending and receiving a message by using a protocol stack with the service access management node; or,
after sending the message to the first access device, sending the message to the service access management node through the first access device, or, receiving the message sent by the first access device, where the message is received by the first access device from the service access management node.

When the network device is the first access device, the message sending and receiving between the terminal device and the network device may include:
sending and receiving a message by using a protocol stack with the first access device.

For the foregoing solution, it can be understood that after the process of switching back described in S302 is completed, a path and context information of the second access link may also be saved, so that when the terminal device and the network device need to switch back again, the second access link is restored according to the path and the context information of the second access link saved. The specific implementation process is as the process described above and will not be elaborated here.

According to the access link management method provided by the present embodiment, after the terminal switches the access link, a path and context information of a source access link are saved; when needing to switch back, the source access link is directly restored according to the path and the context information of the source access link; therefore, there is no need to reallocate the access resources to the terminal device, thus reducing a latency for switching back the access link.

### Second embodiment

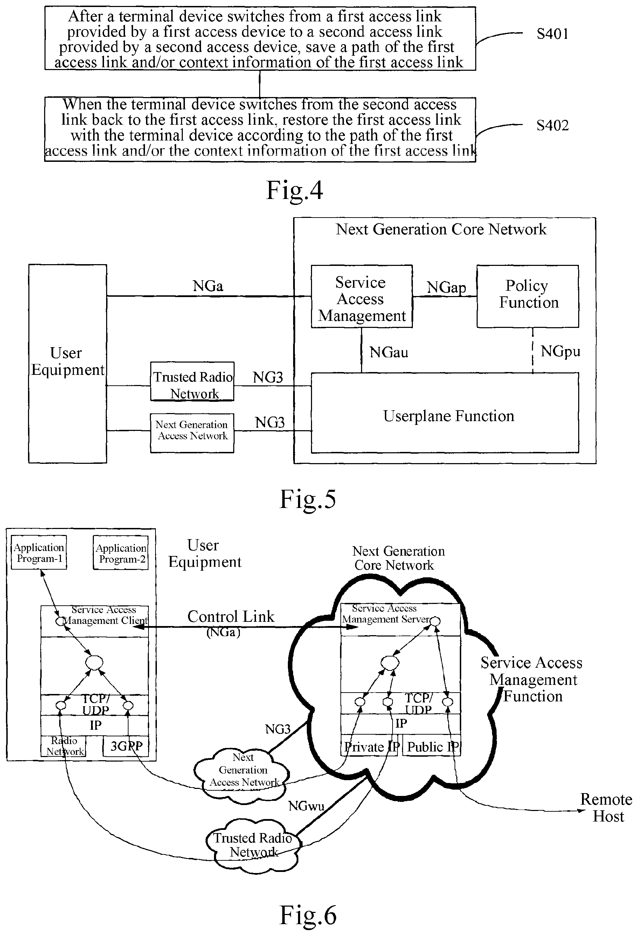

Based on the same inventive concept of the foregoing embodiment, referring to Fig. 4, which illustrates an access link management method provided by an embodiment of the present disclosure, the method may be applied to a network device, where the network device is a first access device or a service access management node ATSSS, and the method includes the following steps.

In S401: after a terminal device switches from a first access link provided by the first access device to a second access link provided by a second access device, a path of the first access link and/or context information of the first access link is saved.

In S402: when the terminal device switches from the second access link back to the first access link, the first access link with the terminal device is restored according to the path of the first access link and/or the context information of the first access link; where, the path of the first access link and/or the context information of the first access link is also saved in the terminal device.

It can be seen from the technical solution shown in Fig. 4 that when needing to switch from the second access link back to the first access link, since the source access link, i.e., the path and the context information of the first access link, has been saved by both the network device and the terminal, the first access link between the terminal device and the first access device may be restored by the first access device or the service access management node ATSSS according to the path and/or the context information of the first access link saved; therefore, there is no need for the first access device to reallocate the access resource to the terminal device, thus reducing a latency for switching back the access link.

For the technical solution shown in Fig. 4, in a probable implementation, the path of the first access link includes a Radio Resource Control (RRC) path, a Non-access Stratum (NAS) path, a Packet Data Network (PDN) path, and a Protocol Data Unit (PDU) session path between the terminal device and the first access device, and a connection between the terminal device and a service access management node;
the context information of the first access link includes at least one or more of the followings:
context information of an access stratum of the terminal device, context information of a non-access stratum of the terminal device, connection information related to the terminal device between the first access device and a core network, and context configuration information of the connection between the terminal device and the service access management node.

For the probable implementation mentioned above, specifically, the context information of the access stratum of the terminal device may include: security configuration information of the access stratum of the terminal, bearer configuration information of the access stratum of the terminal, competence information of the access stratum of the terminal, and the like;
the context information of the non-access stratum of the terminal device includes: security configuration information of the non-access stratum of the terminal, mobile management information of the non-access stratum of the terminal, connection status information of the non-access stratum of the terminal, session management information of the non-access stratum of the terminal, Internet Protocol (IP) address information allocated to the terminal, Quality of Service (Qos) information of the non-access stratum of the terminal, and the like; and
the connection information related to the terminal device between the first access device and the core network includes channel information of a transmission network stratum allocated to the terminal, a device identification of the core network, and an identification of the first access device.

In the actual application process, the access device needs to provide access links for a large number of terminal devices, so the terminal and the access device cannot save the path and the context information of the first access link for a long time. Based on this, during specific implementation, after the terminal device switches from the first access link provided by the first access device to the second access link provided by the second access device, the saving the path of the first access link and/or the context information of the first access link may include:
setting a second timer and timing according to a preset duration;
saving the path of the first access link and/or the context information of the first access link before the second timer expires; and
releasing the path of the first access link and/or the context information of the first access link when the second timer expires.

From this, it can be seen that the time for saving the path of the first access link and/or the context information of the first access link is timed by the timer and the path of the first access link and/or the context information of the first access link is released after the timer expires. A utilization ratio of storage resources of the network device for saving the path of the first access link and/or the context information of the first access link can be improved.

It should be noted that the preset duration may be set according to duration configuration information issued by the network device to the terminal, and may also be obtained after the terminal makes suggestions on the duration setting to the network side by using an interaction with the network device, which will not be elaborated in the present embodiment.

For the technical solution in Fig. 4, in a probable implementation, if the terminal does not occupy all the access resources of the first access link before switching to the second access link, correspondingly, the context information of the first access link may be configuration information of partial bearers or partial Qos flows or partial service data flows or partial PDU sessions or partial PDN connections in the first access link.

For the technical solution in Fig. 4, in a probable implementation, if the terminal occupies all the access resources of the first access link before switching to the second access link, correspondingly, the context information of the first access link may be configuration information of each bearer or each Qos flow or each service data flow or each PDU session or each PDN connection in the first access link.

On the basis of the two probable implementations above, the method shown in Fig. 4 may further include:
identifying the configuration information of partial bearers or partial Qos flows or partial service data flows or partial PDU sessions or partial PDN connections in the first access link, or, identifying the configuration information of each bearer or each Qos flow or each service data flow or each PDU session or each PDN connection in the first access link.

For the technical solution shown in Fig. 4, in a probable implementation, when the terminal device switches from the second access link back to the first access link, the restoring the first access link with the terminal device according to the path of the first access link and/or the context information of the first access link in S402 may specifically include:
when the terminal device switches from the second access link back to the first access link, receiving a restoring request message sent by the network device; and
sending an acknowledgement message to the network device with respect to the restoring request message.

It is understood that the restoring request message may include an identification of configuration information of a bearer or a Qos flow or a service data flow or a PDU session or a PDN connection needing to be restored, so that the network device learns the bearer or the Qos flow or the service data flow or the PDU session or the PDN connection needing to be restored in the first access link according to the identification of the configuration information.

For the technical solution shown in Fig. 4, in another probable implementation, when the terminal device switches from the second access link back to the first access link, the restoring the first access link with the terminal device according to the path of the first access link and/or the context information of the first access link in S402 may specifically include:
when switching from the second access link back to the first access link, sending a restoring instruction message to the terminal device; and
receiving a restoring response message sent by the terminal device with respect to the restoring instruction message.

It is understood that the restoring instruction message includes an identification of configuration information of a bearer or a Qos flow or a service data flow or a PDU session or a PDN connection needing to be restored, so that the terminal device may learn the bearer or the Qos flow or the service data flow or the PDU session or the PDN connection needing to be restored in the first access link according to the identification of the configuration information.

It should be noted that the first access link can be restored after the network device and the terminal interact according to the above two possible implementations.

For the foregoing solution, in a specific implementation, when the network device is the service access management node, the message sending and receiving between the terminal device and the network device may include:
sending and receiving a message by using a protocol stack with the terminal device; or,
receiving the message sent by the first access device, where the message is sent by the terminal device to the first access device, or, sending the message to the first access device, and sending the message to the terminal device through the first access device.

For the foregoing solution, in another specific implementation, when the network device is the first access device, the message sending and receiving between the terminal device and the network device may include:
sending and receiving a message by using a protocol stack with the terminal device.

For the foregoing solution, it can be understood that after the process of switching back described in S402 is completed, a path and context information of the second access link may also be saved by the service access management node or a second access device, so that when needing to switch back again, the second access link is restored according to the path and the context information of the second access link saved. A specific implementation process is as the process described above and will not be elaborated here.

For the foregoing solution, it should be noted that the context information of the first access link may be saved in different network entities according to a type of the configuration information; specifically, the context information of the access stratum may be saved in the first access device, the context information of the non-access stratum may be saved in a core network device, and the connection information related to the terminal device between the first access device and the core network may be saved in the first access device and the core network device.

Moreover, the context information of the first access link may also be totally saved in the core network device. Therefore, when restoring the first access link, the context information of the access stratum is transferred to the access network device by the core network.

According to the access link management method provided by the present embodiment, after the terminal switches the access link, a path and context information of a source access link are saved by the network device; when needing to switch back, the source access link is directly restored according to the path and the context information of the source access link; therefore, there is no need to reallocate an access resource to the terminal device, thus reducing a latency for switching back the access link.

### Third embodiment

Based on the same inventive concept of the forgoing embodiment, the present embodiment illustrates the technical solution of the forgoing embodiment through a specific example. In this specific example, based on the architecture shown in Fig. 2, it may be seen that for the technical solution of the embodiment of the present disclosure, an interested part of the architecture should be as shown in Fig. 5, where ATSSSFunction represents a service access management node, UP Function is a user plane network device of a core network, TrustedWLAN may specifically be a WIFI access point and represent an access device of a non-3GPP access network, while NextGenRAN may specifically be a gNB, and represent an access device of a 3GPP access network. During data transmission for services, the UE or the ATSSSFunction may separate a data flow to be transmitted into the non-3GPP access network and the 3GPP access network for simultaneous transmission, so as to improve the service throughput. Specifically, in a network protocol stack, the data transmission process is shown in Fig. 6. An application program APP-1 in the UE needs to carry out data transmission with a network side. The service access management node may be arranged between the UE and an access network and a core network in the form of Client/Server (C/S). Taking Fig. 6 as an example, the UE is an ATSSS Client, the ATSSS Function between the access network and the core network is an ATSSS Server, and a control connection channel (Control Connection) is arranged between the ATSSS Client and the ATSSS Server, so that control information for multi-connection data transmission can be transmitted between the ATSSS Client and the ATSSS Server.

Referring to the architecture of Fig. 5 and the data transmission process of Fig. 6, in this embodiment, a first access device provides a RAN; and a second access device provides a WLAN. Therefore, a service management node or the first access device and a terminal device save a path of the first access link and/or context information of the first access link after the terminal switches from a first access link provided by the first access device to a second access link provided by the second access device. In this way, when the terminal device switches from the second access link back to the first access link, the first access link with the first access device may be restored between the service management node or the first access device and the terminal device according to the path of the first access link and/or the context information of the first access link. For the detailed implementation process of the service management node or the first access device and the terminal device, the foregoing embodiments may be referred to, which will not be elaborated in this embodiment.

### Fourth embodiment

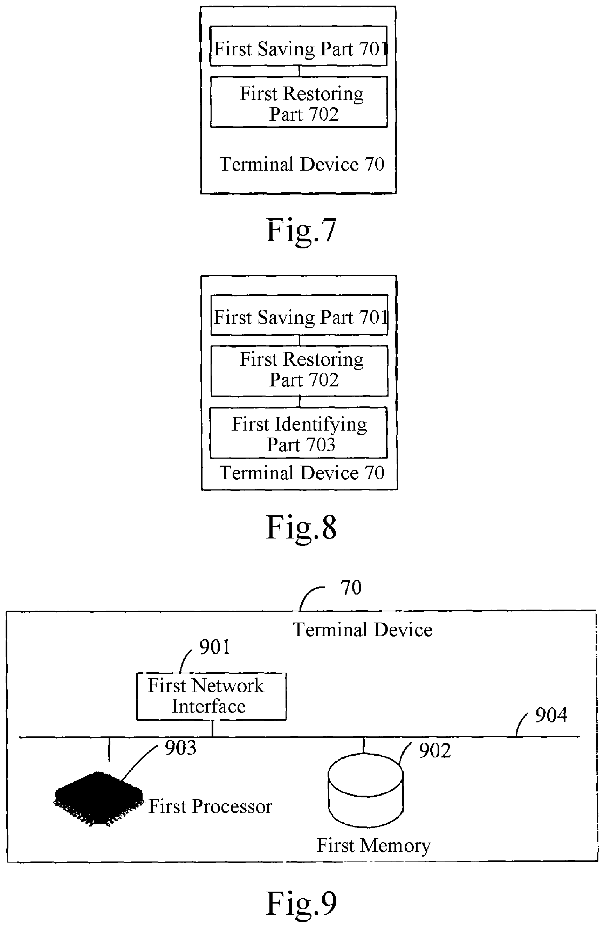

Based on the same inventive concept of the foregoing embodiments, referring to Fig. 7, which illustrates a composition of a terminal device 70 provided by an embodiment of the present disclosure, the terminal device 70 may include a first saving part 701 and a first restoring part 702, wherein:
the first saving part 701 is configured to: after switching from a first access link provided by a first access device to a second access link provided by a second access device, save a path of the first access link and/or context information of the first access link; and
the first restoring part 702 is configured to: when switching from the second access link back to the first access link, restore the first access link with the first access device according to the path of the first access link and/or the context information of the first access link; wherein, the path of the first access link and/or the context information of the first access link is also saved in a network device.

In the foregoing solution, the first saving part 701 is configured to:
after switching from the first access link provided by the first access device to the second access link provided by the second access device, set a first timer and time according to a preset duration;
save the path of the first access link and/or the context information of the first access link before the first timer expires; and
release the path of the first access link and/or the context information of the first access link when the first timer expires.

In the foregoing solution, the context information of the first access link is configuration information of partial bearers or partial QoS flows or partial service data flows or partial PDU sessions or partial PDN connections in the first access link; or,
the context information of the first access link is configuration information of each bearer or each Qos flow or each service data flow or each PDU session or each PDN connection in the first access link.

In the foregoing solution, referring to Fig. 8, a first identifying part 703 is further included, which is configured to:
identify the configuration information of partial bearers or partial Qos flows or partial service data flows or partial PDU sessions or partial PDN connections in the first access link, or, identify the configuration information of each bearer or each Qos flow or each service data flow or each PDU session or each PDN connection in the first access link.

In the foregoing solution, the first restoring part 702 is configured to:
when switching from the second access link back to the first access link, send a restoring request message to a network device; wherein, the restoring request message includes an identification of configuration information of a bearer or a Qos flow or a service data flow or a PDU session or a PDN connection needing to be restored; and
receive an acknowledgement message sent by the network device specific to the restoring request message.

In the foregoing solution, the first restoring part 702 is configured to:
when switching from the second access link back to the first access link, receive a restoring instruction message sent by the network device; where, the restoring instruction message includes an identification of configuration information of a bearer or a Qos flow or a service data flow or a PDU session or a PDN connection needing to be restored; and
send a restoring response message to the network device specific to the restoring instruction message.

In the foregoing solution, when the network device is the service access management node, the first restoring part 702 is configured to:
send and receive a message by using a protocol stack with the service access management node; or,
after sending the message to the first access device, send the message to the service access management node through the first access device, or, receive the message sent by the first access device, wherein the message is received by the first access device from the service access management node.

In the foregoing solution, when the network device is the first access device, the first restoring part 702 is configured to:
send and receive a message by using a protocol stack with the first access device.

It is understood that in the present embodiment, "partial" may be a part of circuit, a part of processor, a part of program or software, etc., and may also be a unit, a module or a non-module.

In addition, each component in the present embodiment may be integrated in one processing unit, or each unit may exist alone physically, or two or more units may be integrated in one unit. The integrated units above may be implemented in the form of hardware, or in the form of software function units.

The integrated units may also be stored in a computer-readable storage medium if being implemented in the form of a software function module, but not sold or used as an independent product. Based on such understanding, the essence of the technical solutions of the present embodiment, or the part contributing to the prior art or all or a part of the technical solutions, may be embodied in the form of a software product. The computer software product is stored in a storage medium including a number of instructions such that a computer device (which may be a personal computer, a server, or a network device, etc.) or a processor performs all or a part of steps of the method described in the present embodiment. The foregoing storage medium includes: any medium that is capable of storing program codes such as a USB disk, a mobile hard disk, a Read Only Memory (ROM), a Random Access Memory (RAM), a magnetic disk or an optical disk, and the like.

Therefore, the present embodiment provides a computer readable medium that stores a supervisory program of an access link, and when the supervisory program of the access link is executed by at least one processor, the steps of the method described in the first embodiment above are implemented.

Based on the above composition of the terminal device 70 and the computer readable medium, referring to Fig. 9, which illustrates a specific hardware structure of the terminal device 70 provided by the embodiment of the present disclosure, the terminal device 70 may include: a first network interface 901, a first memory 902 and a first processor 903, where the components are coupled together through a bus system 904. It can be understood that the bus system 904 is configured to realize communications between these components. The bus system 904 includes a power bus, a control bus, and a status signal bus in addition to a data bus. However, for the sake of clarity, various buses are designated as the bus system 904 in Fig. 9. The first network interface 901 is configured to receive and send a signal in the process of receiving and sending information with other external network element.

The first memory 902 is configured to store a computer program capable of running on the first processor 903.

The first processor 903 is configured to, when running the computer program, execute:
after switching from a first access link provided by a first access device to a second access link provided by a second access device, save a path of the first access link and/or context information of the first access link; and
when switching from the second access link back to the first access link, restore the first access link with the first access device according to the path of the first access link and/or the context information of the first access link.

It can be understood that the first memory 902 in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM) that acts as an external high speed cache. By way of illustration but not limitation, RAMs in many forms are available, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM), and Direct Rambus RAM (DRRAM). The first memory 902 of the systems and methods described herein is intended to include but not limited to these and any other suitable types of memories.

The first processor 903 may be an integrated circuit chip with a signal processing capability. In an implementation process, the steps in the foregoing methods may be completed using an integrated logic circuit of hardware or an instruction in a form of software in the first processor 903. The above first processor 903 may be a general purpose processor, a Digital Signal Processor (DSP), an Application Specific Integrated Circuit (ASIC), a Field Programmable Gate Array (FPGA) or other programmable logic device, a discrete gate, or a transistor logic device, and a discrete hardware assembly. The methods, steps, and logic diagrams disclosed in the embodiments of the present disclosure may be implemented or executed. The general purpose processor may be a microprocessor or the processor may be any conventional processor, or the like. The steps of the methods disclosed with reference to the embodiments of the present disclosure may be directly executed and accomplished by means of a hardware decoding processor or may be executed and accomplished using a combination of hardware and software modules in the decoding processor. The software module may be located in a mature storage medium in the art, such as a random access memory, a flash memory, a read-only memory, a programmable read-only memory, or an electrically erasable programmable memory, a register, etc. The storage medium is located in the first memory 902. The first processor 903 reads information from the first memory 902 and completes the steps of the foregoing methods in combination with the hardware of the processor.

It is to be understood that the embodiments described herein may be implemented in hardware, software, firmware, middleware, microcode, or a combination thereof. For hardware implementation, the processing unit may be implemented in one or more Application Specific Integrated Circuits (ASICs), Digital Signal Processing (DSP), DSP Device (DSPD), Programmable Logic Device (PLD), Field-Programmable Gate Array (FPGA), general purpose processor, controller, microcontroller, microprocessor, and other electronic units for performing the functions of the present application, or a combination thereof.

For software implementations, the technologies described herein may be implemented by modules (e.g., procedures, functions, etc.) that perform the functions described herein. Software codes may be stored in the memory and executed by the processor. The memory may be implemented in the processor or external to the processor.

Specifically, the first processor 903 in the terminal device 70 is further configured to execute the method steps described in the above first embodiment when running the computer program, which will not be elaborated here.

### Fifth embodiment

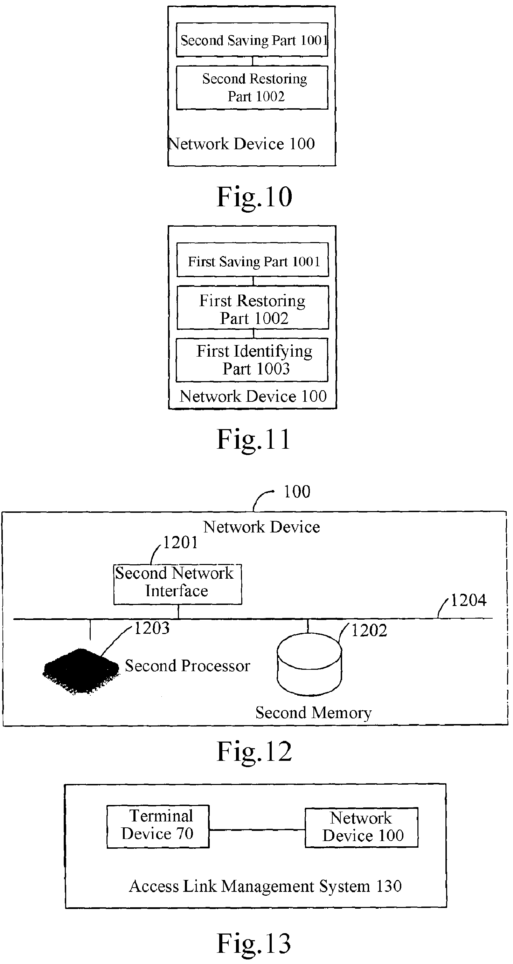

Based on the same inventive concept of the foregoing embodiments, referring to Fig. 10, which illustrates a composition of a network device 100 provided by an embodiment of the present disclosure, the network device 100 may include a second saving part 1001 and a second restoring part 1002.

The second saving part is configured to: after a terminal device switches from a first access link provided by a first access device to a second access link provided by a second access device, save a path of the first access link and/or context information of the first access link.

The second restoring part 1002 is configured to: when the terminal device switches from the second access link back to the first access link, restore the first access link with the terminal device according to the path of the first access link and/or the context information of the first access link; where, the path of the first access link and/or the context information of the first access link is also saved in the terminal device.

In the foregoing solution, the second saving part is configured to:
set a second timer and time according to a preset duration;
save the path of the first access link and/or the context information of the first access link before the second timer expires; and
release the path of the first access link and/or the context information of the first access link when the second timer expires.

In the foregoing solution, referring to Fig. 11, a second identifying part 1003 is further included, which is configured to:
identify the configuration information of partial bearers or partial Qos flows or partial service data flows or partial PDU sessions or partial PDN connections in the first access link, or, identify the configuration information of each bearer or each Qos flow or each service data flow or each PDU session or each PDN connection in the first access link.

In the foregoing solution, the second restoring part 1002 is configured to:
when the terminal device switches from the second access link back to the first access link, receive a restoring request message sent by the network device; where, the restoring request message includes an identification of configuration information of a bearer or a Qos flow or a service data flow or a PDU session or a PDN connection needing to be restored; and
send an acknowledgement message to the network device specific to the restoring request message.

In the foregoing solution, the second restoring part 1002 is configured to:
when switching from the second access link back to the first access link, send a restoring instruction message to the terminal device; where the restoring instruction message includes an identification of configuration information of a bearer or a Qos flow or a service data flow or a PDU session or a PDN connection needing to be restored; and
receive a restoring response message sent by the network device specific to the restoring instruction message.

In the foregoing solution, when the network device is the service access management node, the second restoring part 1002 is configured to:
send and receive a message by using a protocol stack with the terminal device; or,
receive the message sent by the first access device, where the message is sent by the terminal device to the first access device, or, send the message to the first access device, and send the message to the terminal device through the first access device.

In the foregoing solution, when the network device is the first access device, the second restoring part 1002 is configured to:
send and receive a message by using a protocol stack with the terminal device.

In the foregoing solution, the context information of the first access link is saved in different network entities according to a type of the configuration information; where the context information of the access stratum is saved in the first access device, the context information of the non-access stratum is saved in a core network device, and the connection information related to the terminal device between the first access device and the core network is saved in the first access device and the core network device.

In the foregoing solution, the context information of the first access link is saved in the core network device.

Moreover, the present embodiment further provides a computer readable medium that stores a supervisory program of an access link, and when the supervisory program of the access link is executed by at least one processor, the steps of the method described in the second embodiment above are implemented. For the specific description of the computer readable medium, please refer to the description in the fourth embodiment, which will not be elaborated here.

Based on the above composition of the network device 100 and the computer readable medium, please refer to Fig. 12, which illustrates a specific hardware structure of the network device 100 provided by the embodiment of the present disclosure, the network device 100 may include: a second network interface 1201, a second memory 1202 and a second processor 1203; where the components are coupled together through a bus system 1204. It can be understood that the bus system 1204 is configured to realize connection and communications between these components. The bus system 1204 includes a power bus, a control bus, and a status signal bus in addition to a data bus. However, for the sake of clarity, various buses are designated as the bus system 1204 in Fig. 12.

The second network interface 1201 is configured to receive and send a signal in the process of receiving and sending information with other external network element.

The second memory 1202 is configured to store a computer program capable of running on the second processor 1203.

The second processor 1203 is configured to, when running the computer program, execute:
after a terminal device switches from a first access link provided by the first access device to a second access link provided by a second access device, save a path of the first access link and/or context information of the first access link; and
when the terminal device switches from the second access link back to the first access link, restore the first access link with the terminal device according to the path of the first access link and/or the context information of the first access link.

It can be understood that the components in the specific hardware structure of the network device 100 in the embodiment are similar to the corresponding components in the fourth embodiment and will not be elaborated here.

Specifically, the second processor 1203 in the network device 100 is further configured to execute the method steps described in the above second embodiment when running the computer program, which will not be elaborated here.

### Sixth embodiment

Based on the same inventive concept of the foregoing embodiments, referring to Fig. 13, which illustrates an access link management system 130 provided by an embodiment of the present disclosure, the system 130 includes a terminal device 70 and a network device 100.

The terminal device 70 is configured to: after switching from a first access link provided by a first access device to a second access link provided by a second access device, save a path of the first access link and/or context information of the first access link; and
when switching from the second access link back to the first access link, restore the first access link with the first access device according to the path of the first access link and/or the context information of the first access link.

The network device 100 is configured to: after the terminal device 70 switches from the first access link provided by the first access device to the second access link provided by the second access device, save the path of the first access link and/or context information of the first access link; and
when the terminal device 70 switches from the second access link back to the first access link, restore the first access link with the terminal device 70 according to the path of the first access link and/or the context information of the first access link.

In a specific implementation process, the terminal device 70 in the embodiment may be the terminal device 70 described in any of the foregoing embodiments. The network device 100 may be the network device 100 described in any of the foregoing embodiments.

Those skilled in the art will appreciate that the embodiments of the present disclosure can be provided as a method, a system, or a computer program product. Accordingly, the present disclosure can take the form of a hardware embodiment, a software embodiment, or a combination embodiment of software and hardware. Moreover, the present disclosure can take the form of a computer program product embodied on one or more computer usable storage media (including but not limited to disk storage and optical storage, etc.) in which computer usable program codes are included.

The present disclosure has been described with reference to the flow charts and/or block diagrams of the method, device (system), and computer program products according to the embodiments of the present disclosure. It should be appreciated that each flow and/or block in the flow charts and/or block diagrams, and combinations of the flows and/or blocks in the flow charts and/or block diagrams can be implemented by computer program instructions. These computer program instructions may be provided to a general purpose computer, a special purpose computer, an embedded processor, or a processor of other programmable data processing device to produce a machine for the instructions executed by the computer or the processor of other programmable data processing device to generate an apparatus for implementing the functions specified in one or more flows of the flow chart and/or in one or more blocks of the block diagram.

These computer program instructions may also be stored in a computer-readable memory that may guide the computer or other programmable data processing device to work in a specific manner, so that the instructions stored in the computer-readable memory generate a product including an instruction apparatus that implements the functions specified in one or more flows of the flow chart and/or in one or more blocks of the block diagram.

These computer program instructions may also be loaded to a computer, or other programmable data processing device, so that a series of operating steps are executed on the computer, or other programmable data processing device to produce processing implemented by the computer, so that the instructions executed in the computer or other programmable data processing device provide steps for implementing the functions specified in one or more flows of the flow chart and/or in one or more blocks of the block diagram.

The above description is merely embodiments of the present disclosure, but is not intended to limit the protection scope of the present disclosure.

### INDUSTRIAL APPLICABILITY

When needing to switch from the second access link back to the first access link, since the source access link, i.e., the path and the context information of the first access link, has been saved by both the terminal and the network device, the first access link may be restored between the terminal and the first access device according to the path and the context information of the first access link saved; therefore, there is no need for the first access device to reallocate the access resource to the terminal device, thus reducing a latency for switching back the access link.

## Claims

1. An access link management method, applied to a terminal device, comprising:
after switching from a first access link provided by a first access device to a second access link provided by a second access device, saving at least one of a path of the first access link and context information of the first access link; and
when switching from the second access link back to the first access link, restoring the first access link with the first access device according to the at least one of the path of the first access link and the context information of the first access link; wherein, the at least one of the path of the first access link and the context information of the first access link is also saved in a network device.

2. The method according to claim 1, wherein the path of the first access link comprises a Radio Resource Control (RRC) path, a Non-access Stratum (NAS) path, a Packet Data Network (PDN) path and a Protocol Data Unit (PDU) session path between the terminal device and the first access device, and a connection between the terminal device and a service access management node; and
the context information of the first access link comprises at least one or more of followings:
context information of an access stratum of the terminal device, context information of a non-access stratum of the terminal device, connection information related to the terminal device between the first access device and a core network, and context configuration information of the connection between the terminal device and the service access management node.

3. The method according to claim 2, wherein:
the context information of the access stratum of the terminal device comprises: security configuration information of the access stratum of the terminal, bearer configuration information of the access stratum of the terminal, and competence information of the access stratum of the terminal;
the context information of the non-access stratum of the terminal device comprises:
security configuration information of the non-access stratum of the terminal, mobile management information of the non-access stratum of the terminal, connection status information of the non-access stratum of the terminal, session management information of the non-access stratum of the terminal, Internet Protocol (IP) address information allocated to the terminal, and Quality of Service (Qos) information of the non-access stratum of the terminal; and
the connection information related to the terminal device between the first access device and the core network comprises: channel information of a transmission network stratum allocated to the terminal device, a device identification of the core network, and an identification of the first access device.

4. The method according to claim 1, wherein after switching from the first access link provided by the first access device to the second access link provided by the second access device, the saving the at least one of the path of the first access link and the context information of the first access link comprises:
after switching from the first access link provided by the first access device to the second access link provided by the second access device, setting a first timer and timing according to a preset duration;
saving the at least one of the path of the first access link and the context information of the first access link before the first timer expires; and
releasing the at least one of the path of the first access link and the context information of the first access link when the first timer expires.

5. The method according to claim 1, wherein the context information of the first access link is configuration information of partial bearers or partial Qos flows or partial service data flows or partial PDU sessions or partial PDN connections in the first access link; or,
the context information of the first access link is configuration information of each bearer or each Qos flow or each service data flow or each PDU session or each PDN connection in the first access link.

6. The method according to claim 5, further comprising:
identifying the configuration information of partial bearers or partial Qos flows or partial service data flows or partial PDU sessions or partial PDN connections in the first access link, or, identifying the configuration information of each bearer or each Qos flow or each service data flow or each PDU session or each PDN connection in the first access link.

7. The method according to claim 6, wherein when switching from the second access link back to the first access link, the restoring the first access link with the first access device according to the at least one of the path of the first access link and the context information of the first access link comprises:
when switching from the second access link back to the first access link, sending a restoring request message to the network device; wherein, the restoring request message comprises an identification of configuration information of a bearer or a Qos flow or a service data flow or a PDU session or a PDN connection needing to be restored; and
receiving an acknowledgement message sent by the network device with respect to the restoring request message.

8. The method according to claim 6, wherein when switching from the second access link back to the first access link, the restoring the first access link with the first access device according to the at least one of the path of the first access link and the context information of the first access link comprises:
when switching from the second access link back to the first access link, receiving a restoring instruction message sent by the network device; wherein, the restoring instruction message comprises an identification of configuration information of a bearer or a Qos flow or a service data flow or a PDU session or a PDN connection needing to be restored; and
sending a restoring response message to the network device with respect to the restoring instruction message.

9. The method according to claim 1, wherein the network device is an additional service access management node ATSSS, or the first access device.

10. The method according to claim 9, wherein when the network device is the service access management node, sending and receiving a message between the terminal device and the network device comprises:
sending and receiving a message by using a protocol stack with the service access management node; or,
after sending the message to the first access device, sending the message to the service access management node through the first access device, or, receiving the message sent by the first access device, wherein the message is received by the first access device from the service access management node.

11. The method according to claim 9, wherein when the network device is the first access device, sending and receiving a message between the terminal device and the network device comprises:
sending and receiving a message by using a protocol stack with the first access device.

12. An access link management method, applied to a network device which is a first access device or a service access management node, wherein the method comprises:
after a terminal device switches from a first access link provided by the first access device to a second access link provided by a second access device, saving at least one of a path of the first access link and context information of the first access link; and
when the terminal device switches from the second access link back to the first access link, restoring the first access link with the terminal device according to the at least one of the path of the first access link and the context information of the first access link; wherein the at least one of the path of the first access link and the context information of the first access link is also saved in the terminal device.

13. The method according to claim 12, wherein the path of the first access link comprises a Radio Resource Control (RRC) path, a Non-access Stratum (NAS) path, a Packet Data Network (PDN) path and a Protocol Data Unit (PDU) session path between the terminal device and the first access device, and a connection between the terminal device and a service access management node; and
the context information of the first access link comprises at least one or more of followings:
context information of an access stratum of the terminal device, context information of a non-access stratum of the terminal device, connection information related to the terminal device between the first access device and a core network, and context configuration information of the connection between the terminal device and the service access management node.

14. The method according to claim 13, wherein the context information of the access stratum of the terminal device comprises: security configuration information of the access stratum of the terminal, bearer configuration information of the access stratum of the terminal, and competence information of the access stratum of the terminal;
the context information of the non-access stratum of the terminal device comprises:
security configuration information of the non-access stratum of the terminal, mobile management information of the non-access stratum of the terminal, connection status information of the non-access stratum of the terminal, session management information of the non-access stratum of the terminal, Internet Protocol (IP) address information allocated to the terminal, and Quality of Service (Qos) information of the non-access stratum of the terminal; and
the connection information related to the terminal device between the first access device and the core network comprises channel information of a transmission network stratum allocated to the terminal, a device identification of the core network, and an identification of the first access device.

15. The method according to claim 12, wherein after the terminal device switches from the first access link provided by the first access device to the second access link provided by the second access device, the saving the at least one of the path of the first access link and the context information of the first access link comprises:
setting a second timer and timing according to a preset duration;
saving the at least one of the path of the first access link and the context information of the first access link before the second timer expires; and
releasing the at least one of the path of the first access link and the context information of the first access link when the second timer expires.

16. The method according to claim 12, wherein the context information of the first access link is configuration information of partial bearers or partial Qos flows or partial service data flows or partial PDU sessions or partial PDN connections in the first access link; or,
the context information of the first access link is configuration information of each bearer or each Qos flow or each service data flow or each PDU session or each PDN connection in the first access link.

17. The method according to claim 16, further comprising:
identifying the configuration information of partial bearers or partial Qos flows or partial service data flows or partial PDU sessions or partial PDN connections in the first access link, or, identifying the configuration information of each bearer or each Qos flow or each service data flow or each PDU session or each PDN connection in the first access link.

18. The method according to claim 17, wherein when the terminal device switches from the second access link back to the first access link, the restoring the first access link with the terminal device according to the at least one of the path of the first access link and the context information of the first access link comprises:
when the terminal device switches from the second access link back to the first access link, receiving a restoring request message sent by the terminal device; wherein, the restoring request message comprises an identification of configuration information of a bearer or a Qos flow or a service data flow or a PDU session or a PDN connection needing to be restored; and
sending an acknowledgement message to the terminal device with respect to the restoring request message.

19. The method according to claim 17, wherein when the terminal device switches from the second access link back to the first access link, the restoring the first access link with the terminal device according to the at least one of the path of the first access link and the context information of the first access link comprises:
when switching from the second access link back to the first access link, sending a restoring instruction message to the terminal device; wherein, the restoring instruction message comprises an identification of configuration information of a bearer or a Qos flow or a service data flow or a PDU session or a PDN connection needing to be restored; and
receiving a restoring response message sent by the network device with respect to the restoring instruction message.

20. The method according to claim 12, wherein when the network device is the service access management node, sending and receiving a message between the terminal device and the network device comprises:
sending and receiving a message by using a protocol stack with the terminal device; or,
receiving a message sent by the first access device, wherein the message is sent by the terminal device to the first access device, or, sending the message to the first access device, and sending the message to the terminal device through the first access device.

21. The method according to claim 12, wherein when the network device is the first access device, sending and receiving a message between the terminal device and the network device comprises:
sending and receiving a message by using a protocol stack with the terminal device.

22. The method according to claim 13, wherein the context information of the first access link is saved in different network entities according to a type of the configuration information; wherein, the context information of the access stratum is saved in the first access device, the context information of the non-access stratum is saved in a core network device, and the connection information related to the terminal device between the first access device and the core network is saved in the first access device and the core network device.

23. The method according to claim 13, wherein the context information of the first access link is saved in the core network device.

24. A terminal device, comprising: a first saving part and a first restoring part, wherein:
the first saving part is configured to: after switching from a first access link provided by a first access device to a second access link provided by a second access device, save at least one of a path of the first access link and context information of the first access link; and
the first restoring part is configured to: when switching from the second access link back to the first access link, restore the first access link with the first access device according to the at least one of the path of the first access link and the context information of the first access link; wherein, the at least one of the path of the first access link and the context information of the first access link is also saved in a network device.

25. The terminal device according to claim 24, wherein the first saving part is configured to:
after switching from the first access link provided by the first access device to the second access link provided by the second access device, set a first timer and time according to a preset duration;
save the at least one of the path of the first access link and the context information of the first access link before the first timer expires; and
release the at least one of the path of the first access link and the context information of the first access link when the first timer expires.

26. The terminal device according to claim 24, wherein the context information of the first access link is configuration information of partial bearers or partial QoS flows or partial service data flows or partial PDU sessions or partial PDN connections in the first access link; or,
the context information of the first access link is configuration information of each bearer or each Qos flow or each service data flow or each PDU session or each PDN connection in the first access link.

27. The terminal device according to claim 26, further comprising a first identifying part configured to:
identify the configuration information of partial bearers or partial Qos flows or partial service data flows or partial PDU sessions or partial PDN connections in the first access link, or, identify the configuration information of each bearer or each Qos flow or each service data flow or each PDU session or each PDN connection in the first access link.

28. The terminal device according to claim 27, wherein the first restoring part is configured to:
when switching from the second access link back to the first access link, send a restoring request message to the network device; wherein, the restoring request message comprises an identification of configuration information of a bearer or a Qos flow or a service data flow or a PDU session or a PDN connection needing to be restored; and
receive an acknowledgement message sent by the network device with respect to the restoring request message.

29. The terminal device according to claim 27, wherein the first restoring part is configured to:
when switching from the second access link back to the first access link, receive a restoring instruction message sent by the network device; wherein, the restoring instruction message comprises an identification of configuration information of a bearer or a Qos flow or a service data flow or a PDU session or a PDN connection needing to be restored; and
send a restoring response message to the network device with respect to the restoring instruction message.

30. The terminal device according to claim 24, wherein when the network device is the service access management node, the first restoring part is configured to:
send and receive a message by using a protocol stack with the service access management node; or,
after sending the message to the first access device, send the message to the service access management node through the first access device, or, receive the message sent by the first access device, wherein the message is received by the first access device from the service access management node.

31. The terminal device according to claim 24, wherein when the network device is the first access device, the first restoring part is configured to:
send and receive a message by using a protocol stack with the first access device.

32. A network device, comprising a second saving part and a second restoring part, wherein:
the second saving part is configured to: after a terminal device switches from a first access link provided by a first access device to a second access link provided by a second access device, save at least one of a path of the first access link and context information of the first access link; and
the second restoring part is configured to: when the terminal device switches from the second access link back to the first access link, restore the first access link with the terminal device according to the at least one of the path of the first access link and the context information of the first access link; wherein, the at least one of the path of the first access link and the context information of the first access link is also saved in the terminal device.

33. The network device according to claim 32, wherein the second saving part is configured to:
set a second timer and time according to a preset duration;
save the at least one of the path of the first access link and the context information of the first access link before the second timer expires; and
release the at least one of the path of the first access link and the context information of the first access link when the second timer expires.

34. The network device according to claim 32, further comprising a second identifying part configured to:
identify configuration information of partial bearers or partial Qos flows or partial service data flows or partial PDU sessions or partial PDN connections in the first access link, or, identify configuration information of each bearer or each Qos flow or each service data flow or each PDU session or each PDN connection in the first access link.

35. The network device according to claim 34, wherein the second restoring part is configured to:
when the terminal device switches from the second access link back to the first access link, receive a restoring request message sent by the terminal device; wherein, the restoring request message comprises an identification of configuration information of a bearer or a Qos flow or a service data flow or a PDU session or a PDN connection needing to be restored; and
send an acknowledgement message to the terminal device with respect to the restoring request message.

36. The network device according to claim 34, wherein the second restoring part is configured to:
when switching from the second access link back to the first access link, send a restoring instruction message to the terminal device; wherein, the restoring instruction message comprises an identification of configuration information of a bearer or a Qos flow or a service data flow or a PDU session or a PDN connection needing to be restored; and
receive a restoring response message sent by the terminal device with respect to the restoring instruction message.

37. The network device according to claim 32, wherein when the network device is the service access management node, the second restoring part is configured to:
send and receive a message by using a protocol stack with the terminal device; or,
receive a message sent by the first access device, wherein the message is sent by the terminal device to the first access device, or, send the message to the first access device, and send the message to the terminal device through the first access device.

38. The network device according to claim 32, wherein when the network device is the first access device, the second restoring part is configured to:
send and receive a message by using a protocol stack with the terminal device.

39. The network device according to claim 32, wherein the context information of the first access link is saved in different network entities according to a type of the configuration information; wherein, the context information of the access stratum is saved in the first access device, the context information of the non-access stratum is saved in a core network device, and the connection information related to the terminal device between the first access device and the core network is saved in the first access device and the core network device.

40. The network device according to claim 32, wherein the context information of the first access link is saved in the core network device.

41. A terminal device, comprising: a first network interface, a first memory and a first processor, wherein:
the first network interface is configured to receive and send a signal in a process of receiving and sending information with other external network element;
the first memory is configured to store a computer program capable of running on the first processor; and
the first processor is configured to, when running the computer program, execute the steps of the method according to any one of claims 1 to 11.

42. A network device, comprising: a second network interface, a second memory and a second processor;
wherein, the second network interface is configured to receive and send a signal in a process of receiving and sending information with other external network element;
the second memory is configured to store a computer program capable of running on the second processor; and
the second processor is configured to, when running the computer program, execute the steps of the method according to any one of claims 12 to 23.

43. A computer readable medium, wherein the computer readable medium stores a supervisory program of an access link, and when the supervisory program of the access link is executed by at least one processor, the steps of the method according to any one of claims 1 to 11 or any one of claims 12 to 23 are implemented.

44. An access link management system, comprising a terminal device and a network device, wherein:
the terminal device is configured to: after switching from a first access link provided by a first access device to a second access link provided by a second access device, save at least one of a path of the first access link and context information of the first access link; and
when switching from the second access link back to the first access link, restore the first access link with the first access device according to the at least one of the path of the first access link and the context information of the first access link; and
the network device is configured to: after the terminal device switches from the first access link provided by the first access device to the second access link provided by the second access device, save at least one of the path of the first access link and the context information of the first access link; and
when the terminal device switches from the second access link back to the first access link, restore the first access link with the terminal device according to the at least one of the path of the first access link and the context information of the first access link.
